# EUROPEAN PATENT APPLICATION

(11) **EP 2 368 698 A1**
(43) Date of publication of application: **28.09.2011**
(21) Application number: 11159472.7
(22) Date of filing: 23.03.2011
(51) Int. Cl.: B29C 70/08, B29C 70/52

(54) **Fiber-reinforced plastic parts made with untreated embossed surfacing veils with no whitening agents**

(30) Priority: 24.03.2010 US 317113 P
(71) Applicant: Cerex Advanced Fabrics, Inc., Cantonment, FL 32533 (US)
(72) Inventor: Ortega, Albert E., Pensacola, FL 32514 (US); Baillie, Daniel, Cantonment, FL 32533 (US)
(74) Representative: Jappy, John William Graham

(57) **Abstract**

Untreated, embossed surfacing veils with no whitening additives can be used in a fiber-reinforced process to make parts that are more vibrant in color. The lack of whitening agents minimizes the color pollution and provides a part that is richer in color with a smooth, glossy surface. Fabrics with unbonded areas used as surfacing veils allow the veils to be more flexible, improving the performance in the process.

## Description

### CROSS-REFERENCE TO A RELATED APPLICATION

This application claims the benefit of U.S. provisional application Serial No. 61/317,113, filed March 24, 2010, which is incorporated herein by reference in its entirety.

### FIELD OF THE INVENTION

This invention relates to fiber-reinforced plastic parts made with untreated, embossed surfacing veils with no whitening agents.

### BACKGROUND OF THE INVENTION

Titanium dioxide and optical brighteners are added to textiles and other materials to make these items whiter. These whitening agents can be added in the extrusion of man-made fibers and spunbonded fabrics. It is common practice to include them in polyester and other polymer fiber and fabrics. An example of an optical brightener is described in US Patent 3,956,280 to Fleck et al.*,* incorporated herein by reference. Polyester fibers and fabrics typically include these whitening agents. Whiteners will only be added to nylon fibers and fabrics when the application requires it due to the increased costs associated with the additive and the plugging of filters and spin packs in these processes. A spin pack is a combination of parts including a spinneret and plates or filter media used to filter molten polymer and create filaments from the molten stream of polymer. US Patent 3,938,925 to Lees is an example of a spin pack and is incorporated by reference. Polyester surfacing veils sold under the trade name NEXUS@ and REEMAY® contain whitening agents such as titanium dioxide and optical brighteners.

Surfacing veils are commonly used in fiber-reinforced plastic processes to enhance the appearance of the finished part, protect the die from abrasion and to ensure uniform distribution of resin. It is highly desirable for the finished part to have a smooth glossy surface.

Nonwoven fabrics with smooth surfaces such as CEREX®, REEMAY® and NEXUS® fabrics have been used and are well known in the art. These fabrics that are not embossed are used to mask any patterns created by reinforcements such as glass mats or rovings. Embossing creates small areas of film where the pins of the engraved roll contact the fabric. Nonwoven fabrics with about twenty percent bond area are commonly available.

Manufacturers of fiber-reinforced plastics have been reluctant to explore the use of embossed fabrics because it is believed that the bond points of the fabric may reduce the flow of resin and create processing problems. It is also believed that the embossed pattern will create an appearance in the final part that is different than the commonly accepted smooth look.

Treated fabrics have been used in the past as described in US Patent 5,635,252 to Fraser et al. and US Patent 5,935,498 to Vockel, Jr. et al.*;* however, applying material to the surface of these fabrics reduces the porosity and impacts the ability of the resin to flow through the veils. Treating the fabrics increases the cost since another step in the manufacture of these fabrics is required. This is another disadvantage.

Apertured spun laced white polyester fabrics also sold under the trade name NEXUS® are commercially available. These fabrics are useful when a high amount of permeability is desired for high resin flow. The apertured NEXUS® fabrics are also used to mask patterns created by reinforcements such as glass mats or rovings. These veils are more expensive than the non-apertured veils. Aperturing the fabrics increases the cost because another step in the manufacture of these fabrics is required. This is another disadvantage.

Most nylon surfacing veils do not contain any whitening agents and are not bright white like the polyester surfacing veils. Nylon surfacing veils without whiteners are available under the trade names CEREX® and N-FUSION™.

Various methods are used to make fiber-reinforced products. Pultrusion is a continuous process of manufacturing of composite materials with constant cross-section whereby reinforced fibers are pulled through a resin, possibly follower by a separate preforming system used to manipulate the combination of reinforcement and resin in order to reduce die wear and ensure uniformity, and into a heated die, where the resin undergoes polymerization or curing.

Fiber reinforcements such as rovings, mats, woven products and others made of fiberglass, carbon, aramid and other materials are saturated or wet out in uncured thermoset resin. Surfacing veils are commonly used to provide uniform distribution of the resin, protect the metal die from abrasion by the reinforcing materials, such as fiberglass, and enhance the final appearance of the fiber-reinforced plastic part. These saturated materials are then pulled through a heated metal die. The resin transforms from a liquid to a solid in the die. This is known as curing.

Pull speed, die temperature, catalysts and cure promoters are all variables that are used to control the cure rate as the product forms in the die. Many resin types may be used in pultrusion including polyester, polyurethane, vinyl ester, phenolic and epoxy.

The technology is not limited to thermosetting resins. Pultrusion has also been successfully used with thermoplastic matrices such as polybutylene terephthalate either by powder impregnation of the glass fiber or by surrounding it with sheet material of the thermoplastic matrix, which is then molten up.

Reinforcement materials selected will depend on the desired properties of the part being produced. The reinforcement material is pulled through the die under tension. It is critical that a uniform distribution of reinforcement in the resin is achieved to ensure that the finished product does not have any areas of structural weakness. It is also important that the reinforcement material be saturated or wet out with the resin. US Patent 3,960,629 to Goldsworthy describes a pultrusion process and US Patent 4,935,279 to Perko describes a pultrusion process used to make signs. Both patents are incorporated herein by reference.

Compression molding is a method of molding in which the molding material, generally preheated, is first placed in an open, heated mold cavity. In this process, the reinforcement package including surfacing veil (mat(s) or fabric(s)) and the resin are placed on one-half, usually the bottom half, of the mold cavity. The mold is closed with a top force or plug member. Pressure is applied to force the material into contact with all mold areas, while heat and pressure are maintained until the molding material has cured. The process employs thermosetting resins in a partially cured stage, either in the form of granules, putty-like masses, or preforms. Compression molding is a high-volume, high-pressure method suitable for molding complex, high-strength fiberglass reinforcements. Advanced composite thermoplastics can also be compression molded with unidirectional tapes, woven fabrics, randomly orientated fiber mat or chopped strand.

An advantage of compression molding is its ability to mold large, fairly intricate parts. Also, it is one of the lowest cost molding methods compared with other methods such as transfer molding and injection molding; moreover it wastes relatively little material, giving it an advantage when working with expensive compounds. However, compression molding often provides poor product consistency and difficulty in controlling flashing, and it is not suitable for some types of parts. Compression molding produces fewer knit lines and less fiber-length degradation than injection molding. Compression-molding is also suitable for ultra-large basic shape production in sizes beyond the capacity of extrusion techniques.

Contact molding or open molding is another fiber-reinforced plastic process. Resins and reinforcements are manually or mechanically deposited on an open mold surface. The mold surface is preferably previously coated with a gel coat and is provided with a surfacing veil such as a mat or fabric. Once the required amounts of reinforcements and resin have been deposited on the mold, the laminate is usually worked manually, to remove any trapped air and to thoroughly saturate or wet out the reinforcements with resin. Once this is completed, the laminate is allowed to cure, normally at ambient temperature.

Resin transfer molding and structural reaction injection molding are two similar closed mold fiber reinforced plastic processes in which the required reinforcement package, including a surfacing veil such as a mat or fabric, is placed on one-half of the mold cavity, usually the bottom half. Once the reinforcement package is properly positioned, the top half of the mold is closed on the bottom half and secured in place. Next, the resin is injected slowly under minimal (e.g. 50 psi) pressure in resin transfer molding or rapidly under high pressure (e.g. 2000 psi) in structural reaction injection molding. The mechanical pumping and resulting pressure cause the air to be flushed out of the mold cavity and the resin to saturate or wet out the reinforcement. The resin impregnated reinforced article is then allowed to cure.

Filament winding is a fiberglass reinforced plastic process in which reinforcements, normally continuous rovings, are saturated with resin, normally by pulling them through a pan or bath containing the resin. The reinforcements are then wound on a rotating mandrel in a specific pattern. One or more outer layers of surfacing veil may be wrapped over the resin impregnated reinforcement when required. Once the required amount of resin, reinforcements and surfacing veils are properly placed on the mandrel, the laminate is allowed to cure with or without the assistance of heat.

The continuous panel process is a fiber-reinforced plastic process for making continuous flat and/or shaped, e.g. corrugated, panels. It involves depositing a resin on a carrier film that then passes under a reinforcement deposition area. Various types of reinforcement are then applied to the film or resin. The reinforcement and resin then go through a compaction section where a series of belts, screens, or rollers force air out and thoroughly saturate or wet out the reinforcement with resin. A surfacing veil such as a mat or fabric may be placed on either the top or bottom surface of the resulting saturated material and the veil is allowed to be saturated with resin. A carrier film is then applied to the top surface of the resulting article, which is passed through a curing station where the resin cures normally with the assistance of heat. Once cured, the carrier film is removed and the article is cut to the desired length.

A publication of Fiberglas Canada, Inc. entitled "An Introduction to Fiberglas-Reinforced Plastics/Composites" provides a detailed overview of fiber-reinforced plastic production. The teachings of this publication are hereby incorporated by reference into this application.

Embossing is defined as creating a three dimensional image on fabric with heat and pressure using rolls typically made of metal; however other materials such as rubber can be used. There are typically unbonded areas in the resulting fabric. US Patent 4,075,383 to Anderson et al. and US Patent 5,431,986 to Ortega et al. are examples of methods used to create embossed fabrics and are incorporated herein by reference. This technology is currently practiced without the gas house by Cerex Advanced Fabrics, Inc. in Cantonment, Florida. The removal of the gas house reduces corrosion associated with hydrochloric acid and creates a softer more drapeable fabric. The fibers that do not come in contact with the pins on the engraved roll are unbonded and have some freedom of movement.

### BRIEF SUMMARY OF THE INVENTION

The subject invention provides fiber-reinforced plastic parts made with an embossed surfacing veil that does not include any additives that make it whiter. The surfacing veil is neither apertured nor treated, thus reducing costs by avoiding down stream processing steps.

Untreated, embossed, surfacing veils that are not apertured provide a smooth surface finish in the fiber reinforced plastic part that is glossy and more vibrant in color. The embossed pattern is barely visible because the surface veil blends into the resin and almost disappears into the part.

Useful surfacing veils can be created using a variety of nonwoven manufacturing techniques including, but not limited to, spunbonding, thermal bonding staple yarns, needle punching and spun lacing.

The surfacing veils of this invention have no appreciable amount of optical brighteners. no appreciable amount of titanium dioxide, a permeability that freely allows resin flow, a desirable stiffness and a certain amount of unbonded filaments that promotes free flow of resin and flexibility in the veil.

In one embodiment of the invention, a method of producing a fiber-reinforced plastic includes providing a resin for the fiber-reinforced plastic with an embossed surfacing veil such that the embossed surfacing veil is in contact with the resin, wherein the embossed surfacing veil does not contain any whitening agents.

In another embodiment, a method of producing a fiber-reinforced plastic includes providing a resin for the fiber-reinforced plastic with an embossed surfacing veil such that the embossed surfacing veil is in contact with the resin, wherein the embossed surfacing veil does not contain any whitening agents, wherein the embossed surfacing veil has an air permeability of less than 500 cubic feet per minute per square foot, and wherein the embossed surfacing veil has a basis weight of at least 1 ounce per square yard, and wherein the embossed surfacing veil provides a rough surface to the fiber-reinforced plastic.

In yet another embodiment, a fiber-reinforced plastic is produced by providing a resin for the fiber-reinforced plastic with an embossed surfacing veil such that the embossed surfacing veil is in contact with the resin, wherein the surfacing veil contains no whitening agents.

In yet a further embodiment, a surfacing veil used to make a fiber-reinforced plastic is embossed and contains no whitening agents.

### DETAILED DISCLOSURE OF THE INVENTION

When the term "about" is used herein, in conjunction with a numerical value, it is understood that the value can be in a range of 95% of the value to 105% of the value, i.e. the value can be +/- 5% of the stated value. For example, "about 1 kg" means from 0.95 kg to 1.05 kg.

This invention relates to the use of untreated, embossed surfacing veils for use in improving the surface appearance and/or color of fiberglass reinforced parts. The surfacing veils also provide advantages in the manufacture of these parts. No additives are used in the veil to make them appear whiter. Typical additives to increase whiteness are titanium dioxide and optical brighteners; however, others can be used. In certain embodiments, the embossed surfacing veils have areas of filaments that are not bonded, thereby increasing the ability of the resin to flow through the veil such that the resin better saturates, or better wets out, the reinforcing materials. Embodiments of the subject invention relate to fiber-reinforced plastic parts made with untreated, embossed surfacing veils with no whitening agents. The surfacing veils also do not include any color additives, though certain embodiments may include other additives that do not impact the natural color of the veil. The use of these veils advantageously improves the appearance and color of the fiber-reinforced plastic part. These veils allow the resin to better saturate or better wet out the reinforcing materials.

The lack of whitening agents minimizes the color pollution and provides a fiber-reinforced plastic part that is richer in color with a smooth, glossy surface. Fabrics with unbonded areas used as surfacing veils can allow the veils to be more flexible, thereby improving the performance in the process. High air permeability, for example at least 685 cubic feet per minute per square foot, is also beneficial in allowing resin to freely flow through the surfacing veil.

In the following detailed description of the subject invention and its preferred embodiments, specific terms are used in describing the invention; however, these are used in a descriptive sense only and not for the purpose of limitation. It will be apparent to the skilled artisan having the benefit of the instant disclosure that the invention is susceptible to numerous variations and modifications within its spirit and scope.

Embossed fabrics with fibers that have some freedom of movement are especially advantageous when resin is applied to the fabric when used as a surfacing veil. The unbonded areas allow resin to flow freely through the fabric. Embossed fabrics are commercially available from Cerex Advanced Fabrics, Inc. in Cantonment, Florida under the trade names N-FUSION™, PBN-II®, ORION®, SPECTRALON® and SPECTRAMAX®. Embossed fabrics without additives that whiten the fabric are commercially available from Cerex Advanced Fabrics, Inc. in Cantonment, Florida under the trade names N-Fusion™, PBN-II®, Orion®, and SpectraMax®.

In one embodiment, a one ounce per square yard spunbond nylon fabric made with the PBN-II® pattern, US Trademark 2,163,166, can be used with a polyester resin with red pigment to make a fiber-reinforced plastic strip. The strip can be, for example, about two inches wide and about 0.25 inches thick. The strip can be made at, for example, about twenty inches per minute on a pultrusion line. The fabric can be, for example, one ounce per square yard or about one ounce per square yard, and can have, for example, an air permeability of about 773 cubic feet per minute per square foot, a machine direction grab strength of about 29.9 pounds force, and a cross direction grab strength of 20.9 pounds force (or about 20.9 pounds force). In one embodiment, the fabric has a machine grab elongation of 69% or about 69% and a cross direction grab elongation of 75.3% or about 75.3%. The denier per filament of the individual filaments can be four or about four.

Parts made with this surfacing veil can have a smooth surface and a richer color compared to other parts similarly made with surfacing veils that contain titanium dioxide and optical brighteners. This surfacing veil can perform well in a pultrusion system, wetting well, lying flat and not lifting due to resin trapped bellow the surface veil (such lifting is referred to as ballooning). The embossed pattern can promote folding at the edges of the strip parts and can be barely visible in the fiber reinforced plastic parts. In one embodiment, such a surfacing veil has a basis weight of no more than 1.2 ounces per square yard. In a further embodiment, such a surfacing veil has a basis weight of no more than 1 ounce per square yard.

In another embodiment, a spunbond nylon fabric has a basis weight of 1.3 ounce per square yard (or about 1.3 ounce per square yard) and is made with a forty-five degree pattern of small bone-like points. This fabric can be used with a polyester resin with red pigment to make a fiber reinforced plastic strip. The strip can be, for example, about two inches wide and about 0.25 inches thick. The strip can be made at, for example, about twenty inches per minute on a pultrusion line. The fabric can have an air permeability of, for example, 302 cubic feet per minute or about 302 cubic feet per minute per square foot, a machine direction grab strength of 40.3 pounds force or about 40.3 pounds force, and a cross direction grab strength of 28.4 pounds force or about 28.4 pounds force. The denier per filament of the individual filaments can be two or about two. Parts made with this surfacing veil can have a smooth surface and a richer color compared to other parts similarly made with surfacing veils that contained titanium dioxide and optical brighteners. This surfacing veil does not perform as well as the one ounce per square yard fabric with high air permeability; it can exhibit ballooning. Costs of the spunbonded fabrics typically increase with basis weight so this fabric is typically more expensive than a one ounce per square yard nylon thermally bonded fabric.

In these embodiments the fabrics used for surfacing veils can be made using the well-known process of spunbonding. A nylon 6,6 polymer can be melted and extruded at a temperature of about 295°C. Filaments can then be attenuated and drawn pneumatically using aspirating jets or a slot device and deposited onto a laydown or forming box. The resulting webs can then be directed to a calender where about 20% of the surface area is bonded at discrete points at a temperature of about 216°C.

Fiber-reinforced plastic parts of the subject invention can be made by any process known in the art, for example by pultrusion, compression molding, transfer molding, resin transfer molding, or the manual hand lay up technique. In many embodiments, a fiber-reinforced plastic is made by one of these processes, wherein a resin for the fiber-reinforced plastic is provided with an embossed surfacing veil, wherein the embossed surfacing veil is in contact with the resin, and wherein the embossed surfacing veil does not contain any whitening agents. The manual hand lay up technique can also be used to make a fiber-reinforced plastic of the subject invention. In the manual hand lay up technique, a mat (e.g., a glass mat) is set on a flat surface (e.g., plywood), and resin is placed on it, followed by placing a surfacing veil on top of the resin and then using another flat surface (e.g., a blade) to smooth out the resin.

Different resin systems and fiber-reinforced plastic processes can be used with this invention. One skilled in the art will realize that each combination of resin system and fiber reinforced plastic process will require optimization to achieve the results observed in the following examples. For example, different resins may require changes in processing temperatures, pressures and line speeds. Different processes may require or allow the manufacturer to use different basis weights, different resins, different amounts of glass, etc. The practitioner must also select the surfacing veil with a permeability that will allow a sufficient flow of resin to wet out the reinforcement material with the benefit of the current disclosure. The combination of mass, thickness, permeability and tensile properties can be chosen to achieve the desired results. Different bond patterns can also impact the performance of the surfacing veil.

The veils of the subject invention can be made from many different materials. Any material that can withstand the rigors of the fiber reinforced plastic processes can be used. Materials that can be used include, but are not limited to, nylon, polyester, polytetrafluoroethylene, and polybutylene terephthalate. In a preferred embodiment, it is desirable for the materials to have an air permeability of at least 500 cubic feet per minute per square foot when used in the pultrusion process.

In another embodiment of the invention, surfacing veils with higher basis weights and lower air permeability can be used to impart a surface that is not smooth, enhancing the gripping performance of the fiberglass reinforced part. In a preferred embodiment, a 1.3 ounce per square yard fabric with air permeability of 498 cubic feet per min per square foot can be used as a surfacing veil when making a surf board using a hand lay up process or a resin transfer molding process to improve the gripping of the board to, for example, a human foot. In this embodiment a rougher surface is preferred. Higher basis weight surfacing veils with lower air permeability can be used as long as they are processed in such a manner to remove and distribute the resin in such a way that the pattern of the fabric is felt on the surface of the part.

There are many other applications where a rougher surface in a fiberglass reinforced part would be an advantage. One example is a surface used to walk on, such as a boardwalk in a public area. It would be advantageous to provide a non-skid surface on panels or boards that are used to make the surface that is walked on.

In one embodiment of the subject invention, a surfacing veil can be 4 ounces per square yard (or about 4 ounces per square yard) and can be used as a component veil to provide a rough surface in a fiberglass reinforced part made using the resin transfer molding process. Such veils are available from, for example, Cerex® Advanced Fabrics, Inc. in Cantonment, Florida under the trade names N-Fusion™ Type 30 and N-Fusion™ Type 70 and the trade names SpectraMax®, Orion® and PBN-II®. These veils are available with or without pigments and dyes. Pigments and dyes can be added to the resin to make a colored part.

In various embodiments, a surfacing veil fabric can have a basis weight (density) of any of the following values or ranges (all values are in ounces per square yard): 0.1, 0.2, 0.3, 0.4, 0.5, 0.6. 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, about 0.1, about 0.2, about 0.3, about 0.4, about 0.5, about 0.6, about 0.7, about 0.8, about 0.9, about 1, about 1.1, about 1.2, about 1.3, about 1.4, about 1.5, about 1.6, about 1.7, about 1.8, about 1.9, about 2, about 2.1, about 2.2, about 2.3, about 2.4, about 2.5, about 2.6, about 2.7, about 2.8, about 2.9, about 3, about 3.1, about 3.2, about 3.3, about 3.4, about 3.5, about 3.6, about 3.7, about 3.8, about 3.9, about 4, about 4.1, about 4.2, about 4.3, about 4.4, about 4.5, about 4.6, about 4.7, about 4.8, about 4.9, about 5, about 5.1, about 5.2, about 5.3, about 5.4, about 5.5, about 5.6, about 5.7, about 5.8, about 5.9, about 6, about 6.1, about 6.2, about 6.3, about 6.4, about 6.5, about 6.6, about 6.7, about 6.8, about 6.9, about 7, at least 0.1, at least 0.2, at least 0.3, at least 0.4, at least 0.5, at least 0.6, at least 0.7, at least 0.8, at least 0.9, at least 1, at least 1.1, at least 1.2, at least 1.3, at least 1.4, at least 1.5, at least 1.6, at least 1.7, at least 1.8, at least 1.9, at least 2, at least 2.1, at least 2.2, at least 2.3, at least 2.4, at least 2.5, at least 2.6, at least 2.7, at least 2.8, at least 2.9, at least 3, at least 3.1, at least 3.2, at least 3.3, at least 3.4, at least 3.5, at least 3.6, at least 3.7, at least 3.8, at least 3.9, at least 4, at least 4.1, at least 4.2, at least 4.3, at least 4.4, at least 4.5, at least 4.6, at least 4.7, at least 4.8, at least 4.9, at least 5, at least 5.1, at least 5.2, at least 5.3, at least 5.4, at least 5.5, at least 5.6, at least 5.7, at least 5.8, at least 5.9, at least 6, at least 6.1, at least 6.2, at least 6.3, at least 6.4, at least 6.5, at least 6.6, at least 6.7, at least 6.8, at least 6.9, at least 7, no more than 0.1, no more than 0.2, no more than 0.3, no more than 0.4, no more than 0.5, no more than 0.6, no more than 0.7, no more than 0.8, no more than 0.9, no more than 1, no more than 1.1, no more than 1.2, no more than 1.3, no more than 1.4, no more than 1.5, no more than 1.6, no more than 1.7, no more than 1.8, no more than 1.9, no more than 2, from 1 to 1.3, from about 1 to about 1.3, from 1 to 4, from about 1 to about 4, from 1.3 to 4, or from about 1.3 to about 4.

In various embodiments, the fiber-reinforced plastic strip (or part) can have a thickness of any of the following values or ranges (all values are in inches): 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, about 0.05, about 0.1, about 0.15, about 0.2, about 0.25, about 0.3, about 0.35, about 0.4, about 0.45, about 0.5, about 0.55, about 0.6, about 0.65, about 0.7, about 0.75, about 0.8, about 0.85, about 0.9, about 0.95, about 1, about 1.05, about 1.1, about 1.15, about 1.2, about 1.25, about 1.3, about 1.35, about 1.4, about 1.45, about 1.5, about 1.55, about 1.6, about 1.65, about 1.7, about 1.75, about 1.8, about 1.85, about 1.9, about 1.95, about 2, no more than 0.25, or at least 0.25.

In various embodiments, a surfacing veil fabric can have an air permeability of any of the following values or ranges (all values are in cubic feet per minute per square foot): 302, 318, 498, 500, 511, 668, 685, 773, 905, about 302, about 318, about 498, about 500, about 511, about 668, about 685, about 773, about 905, at least 302, at least 318, at least 498, at least 500, at least 511, at least 668, at least 685, at least 773, at least 905, no more than 302, no more than 318, no more than 498, no more than 500, no more than 511, no more than 668, no more than 685, no more than 773, no more than 905, less than 302, less than 318, less than 498, less than 500, less than 511, less than 668, less than 685, less than 773, less than 905, from 685 to 905, from about 685 to about 905, from 500 to 905, from about 500 to about 905, or about any integer value between 685 and 905.

In various embodiments, a surfacing veil fabric can have machine direction grab strength of any of the following values or ranges (all values are in pounds force): 5, 23, 29.9, 36.8, 40.3, 46, about 5, about 23, about 29.9, about 36.8, about 40.3, about 46, at least 5, at least 23, at least 29.9, at least 36.8, at least 40.3, at least 46, from 23 to 46, from about 23 to about 46, or about any value between 5 and 46.

In various embodiments, a surfacing veil fabric can have a cross direction grab strength of any of the following values or ranges (all values are in pounds force): 5, 15, 20.9, 23.5, 28.4, 29, about 5, about 15, about 20.9, about 23.5, about 28.4, about 29, at least 5, at least 15, at least 20.9, at least 23.5, at least 28.4, at least 29, from 15 to 29, from about 15 to about 29, or about any value between 5 and 29.

In various embodiments, a surfacing veil fabric can have a machine grab elongation (note that machine grab elongation can be greater than 100%) of any of the following values or ranges: 49.9%, 69%, about 49.9%, about 69%, at least 49.9% (and can be greater than 100%), at least 69% (and can be greater than 100%), no more than 49.9%, no more than 69%, from 49.9% to 69%, from about 49.9% to about 69%, or about any value between 49.9% and 69%.

In various embodiments, a surfacing veil fabric can have a cross grab elongation (note that cross grab elongation can be greater than 100%) of any of the following values or ranges: 57.6%, 75.3%, about 57.6%, about 75.3%, at least 57.6% (and can be greater than 100%), at least 75.3% (and can be greater than 100%), no more than 57.6%, no more than 75.3%, from 57.6% to 75.3%, from about 57.6% to about 75.3%, or about any value between 57.6% and 75.3%.

In various embodiments, a surfacing veil fabric can have a denier per filament of the individual filaments of any of the following values or ranges: 1, 2, 3, 4, 5, 6, 7, 8, about 1, about 2, about 3, about 4, about 5, about 6, about 7, about 8, at least 1, at least 2, at least 3, at least 4, at least 5, at least 6, at least 7, at least 8, no more than 1, no more than 2, no more than 3, no more than 4, no more than 5, no more than 6, no more than 7, no more than 8, from 1 to 8, from about 1 to about 8, from 1 to 4, from about 1 to about 4, from 2 to 4, or from about 2 to about 4.

It should be understood that the examples and embodiments described herein are for illustrative purposes only and that various modifications or changes in light thereof will be suggested to persons skilled in the art and are to be included within the spirit and purview of this application and the scope of the appended claims.

### EXAMPLE I

Fiberglass reinforced plastic parts were made that were about two inches wide and 0.25 inches thick. A two inch wide by 0.25 inch thick strip die was used to make initial samples using no veil. A polyester resin was used. The polyester resin formulation consists of 25 parts of clay filler per hundred of resin and 3 parts of low profile additive. A viscosity of 940 cps was measured. This is considered a moderate to low viscosity system and ideal for impregnation by wet bath methods. Reactivity is suitable for production speeds of up to 3 feet per minute for this thickness. Red urethane vehicle pigment purchased from Plasticolors was used. Polyester resin composite samples were produced with typical alternating plies of continuous strand mat and E-glass roving. Total glass content was 62.4% by weight. Two twelve inch heating zones were employed. The first heater was within seven inches of the entrance to the die. Operating temperatures were 275 °F in the zone closest to the die entrance and 360 °F in the second zone. Line speed was twenty inches per minute.

The surface of these parts was not smooth. Glass fibers from rovings could be seen on the surface.

### EXAMPLE 2

A set of parts was made using the same process described in Example 1 with the addition of a one ounce per square yard spunbond nylon fabric made with the trademarked PBN-II® pattern, US Trademark 2,163,116, used as a surfacing veil. This fabric is available from Cerex Advanced Fabrics in Cantonment, Florida as Style 30100. This veil contained neither titanium dioxide nor optical brighteners.

The one ounce per square yard fabric has an air permeability of about 773 cubic feet per minute per square foot, a machine direction grab strength of about 29.9 pounds force and a cross direction grab strength of about 20.9 pounds force. This fabric has a machine grab elongation of about 69% and a cross direction grab elongation of about 75.3%.

These parts had a smooth surface and a richer color compared to other parts similarly made with surfacing veils that contained titanium dioxide and optical brighteners. The lack of whitening agents did not pollute the color. The PBN-II® pattern was barely visible in the part. This surfacing veil performed well in a pultrusion system, wetting well, lying flat and not lifting due to resin trapped below the surface veil (referred to as ballooning). The embossed pattern promoted folding at the edges of the strip parts.

### EXAMPLE 3

A set of parts was made using the same process described in Example 1 with the addition of a one ounce per square yard spunbond smooth surfaced nylon fabric made with the process described in US Patents 3,516,900 to Mallonee et al. and US Patent 3,853,659 to Rhodes. This process is commonly referred to as the CEREX® process.

The fabric selected for the surfacing veil was a one ounce per square yard fabric, Style 23100 available from Cerex Advanced Fabrics in Cantonment, Florida under the trade name N-FUSION™. This veil contained neither titanium dioxide nor optical brighteners.

The one ounce per square yard fabric has an air permeability of about 511 cubic feet per minute per square foot, a machine direction grab strength of about 36.8 pounds force and a cross direction grab strength of about 23.5 pounds force. This fabric has a machine grab elongation of about 49.9% and a cross direction grab elongation of about 57.6%, The denier per filament of the individual filaments is about four.

Parts made with this veil had a smooth surface and a richer color compared to other parts similarly made with surfacing veils that contained titanium dioxide and optical brighteners. The lack of whitening agents did not pollute the color. This surfacing veil performed well in a pultrusion system but occasionally lifted due to resin trapped below the surface veil. These smooth bonded nylon fabrics are used as surfacing veils in the production of fiber reinforced plastic parts.

### EXAMPLE 4

A set of parts was made using the same process described in Example 1 with the addition of a 1.3 ounce per square yard spunbond nylon fabric made with a forty-five degree pattern of small bone-like points. The 1.3 ounce per square yard fabric has an air permeability of about 302 cubic feet per minute per square foot, a machine direction grab strength of about 40.3 pounds force and a cross direction grab strength of 28.4 pounds force. The denier per filament of the individual filaments is about two.

Parts made with this surfacing veil had a smooth surface and a richer color compared to other parts similarly made with surfacing veils that contained titanium dioxide and optical brighteners. The embossed pattern was more pronounced than the parts made in Example 2 since the basis weight of the veil was higher. This surfacing veil did not perform as well as the one ounce per square yard fabric with high air permeability. It exhibited ballooning.

### EXAMPLE 5

A set of parts was made using the same process described in Example 1 with the addition of smooth surfacing veils that contained whitening agents. All these veils contained optical brighteners and most likely titanium dioxide. The white veils were NEXUS® Style 039-00010 and NEXUS® Style 115-00005 and REEMAY® Style 2014, all available from Precision Fabrics Group. Surfacing veils were inserted dry and close to the die entrance. None of these fabrics are embossed.

The NEXUS® 039-00010 is apertured to open the fabric to allow higher resin flow. The air permeability of the NEXUS® Style 039-00010 was measured at 668 cubic feet per minute per square yard. The machine direction grab strength is 23 force pounds and the cross direction grab strength is 15 force pounds. The air permeability of the NEXUS® Style 115-00005 was measured at 318 cubic feet per minute per square yard. The machine direction grab strength is 46 force pounds and the cross direction grab strength is 29 force pounds. The air permeability of the REEMAY® Style 2014 was measured at 905 cubic feet per minute per square yard. Parts made with all these veils were not as vibrant as parts made with veils with no whitening agents.

Parts made with the NEXUS® 039-00010 veil had a whitened appearance compared to the parts made in Examples 1, 2, 3, and 4. This veil did not perform well in the pultrusion process and exhibited ballooning.

Parts made with the REEMAY® Style 2014 surfacing veil displayed the nonuniformity of the veil on the surface. Filaments of the surfacing veil could be easily seen and these parts were not as attractive as the parts made in Examples 2, 3 and 4. All the parts made with these veils did not have the intensity of color exhibited by the parts made in Examples 1, 2 and 3. The whitening agents contaminate the color and lower the intensity of the color.

### EXAMPLE 6

A fiber reinforced surf board can be made using a hand lay up process with fiberglass and polyester resin. A 1.3 ounce per square yard fabric can be used with an air permeability of 498 cubic feet per min per square foot as a surfacing veil. The glass mat and the surfacing veil can be wetted out and wiped in such a way that the surfacing veil will impart a surface to the board that is not smooth. If desired, pigments and dyes can be added to both the surfacing veil and the resin to make a surfboard of different colors including a white board.

## Claims

1. A method of producing a fiber-reinforced plastic, comprising:
providing a resin for the fiber-reinforced plastic with an embossed surfacing veil, wherein the surfacing veil is in contact with the resin, and wherein the embossed surfacing veil does not contain any whitening agents.

2. The method according to claim 1, wherein the embossed surfacing veil has an air permeability of less than 500 cubic feet per minute per square foot, and wherein the embossed surfacing veil has a basis weight of at least 1 ounce per square yard, and wherein the embossed surfacing veil provides a rough surface to the fiber-reinforced plastic.

3. The method according to claim 1, further comprising:
adding the resin to a die; and
performing a pultrusion process on the resin.

4. The method according to claim 1, wherein the embossed surfacing veil has an air permeability of at least 500 cubic feet per minute per square foot.

5. The method according to claim 1, wherein the embossed surfacing veil has an air permeability of at least 685 cubic feet per minute per square foot.

6. The method according to claim 1, wherein the embossed surfacing veil comprises at least one material selected from the group consisting of nylon, polyester, polytetrafluoroethylene, and polybutylene terephthalate.

7. The method according to claim 1, wherein the embossed surfacing veil has a basis weight of at least 1 ounce per square yard.

8. The method according to claim 1, wherein the embossed surfacing veil has a basis weight of no more than 1 ounce per square yard.

9. The method according to claim 1 or claim 2, wherein at least one of the embossed surfacing veil and the resin comprises a pigment or a dye.

10. A fiber-reinforced plastic produced by providing an embossed surfacing veil to a resin of the fiber-reinforced plastic, wherein the surfacing veil contains no whitening agents.

11. The fiber-reinforced plastic according to claim 10, wherein the embossed surfacing veil has an air permeability as defined in either claim 4 or claim 5.

12. The fiber-reinforced plastic according to claim 10, wherein the embossed surfacing veil is as defined in any of claims 6 or 7.

13. The fiber-reinforced plastic according to claim 10, wherein the embossed surfacing veil has an air permeability of less than 500 cubic feet per minute per square foot, and wherein the fiber-reinforced plastic has a rough surface provided by the embossed surfacing veil.

14. The fiber-reinforced plastic according to claim 10, wherein the fiber-reinforced plastic is colored, and wherein at least one of the embossed surfacing veil and a resin of the fiber-reinforced plastic comprises a pigment or a dye.

15. A surfacing veil used to make a fiber-reinforced plastic, wherein the surfacing veil is embossed and contains no whitening agents and optionally wherein the surfacing veil is as defined in claim 4 or claim 6.
